**Europäisches Patentamt**

**European Patent Office**

**Office européen des brevets**

(19)

(11) Veröffentlichungsnummer: **0 021 247 B1**

# EUROPÄISCHE PATENTSCHRIFT

(12)

(45) Veröffentlichungstag der Patentschrift:
16.03.83

(21) Anmeldenummer: 80103247.5

(22) Anmeldetag: 11.06.80

(51) Int. Cl.³: **C 12 G 3/08,** C 12 H 1/16,
B 01 D 13/00

(54) **Verfahren und Vorrichtung zur Alkoholreduzierung vergorener Getränke durch Dialyse.**

(30) Priorität: 15.06.79 DE 2924283
07.09.79 DE 2936164
27.10.79 DE 2943518

(43) Veröffentlichungstag der Anmeldung:
07.01.81 Patentblatt 81/1

(45) Bekanntmachung des Hinweises auf die Patenterteilung:
16.03.83 Patentblatt 83/11

(84) Benannte Vertragsstaaten:
AT BE CH DE FR GB IT LI LU NL SE

(56) Entgegenhaltungen:

DE-A-2 339 206
FR-A-1 585 376
FR-A-2 333 546
GB-A-1 079 517
GB-A-1 177 126
US-A-2 122 761

(73) Patentinhaber: Akzo GmbH,
Postfach 10 01 49 Kasinostrasse 19-23,
D-5600 Wuppertal-1 (DE)

(72) Erfinder: Bandel, Werner, Dr. Dipl.-Chem.,
Mörickestrasse 7, D-5600 Wuppertal 2 (DE)
Erfinder: Schmitz, Franz Josef, Dr. Dipl.-Chemiker, Am
Stadtwald 28, D-8765 Erlenbach (DE)
Erfinder: Ostertag, Karl, Dr. Dipl.-Ing., Dr.
Jordanstrasse 2, D-8765 Erlenbach (DE)
Erfinder: Garske, Friedrich, Ing. (grad.),
Winterbergstrasse 81, D-5600 Wuppertal 2 (DE)
Erfinder: Breidohr, Hans Günter, Oederstrasse 23b,
D-5600 Wuppertal 2 (DE)

Verfahren und Vorrichtung zur Alkoholreduzierung vergorener Getränke durch Dialyse

Die Erfindung betrifft ein Verfahren und eine Vorrichtung zur Alkoholreduzierung vergorener Getränke, wie Bier, Wein, Sekt und dergleichen durch Dialyse.

Aus verschiedenen Gründen wird seit Jahren versucht, vergorene Getränke, wie Bier, Wein, Sekt und dergleichen mit reduziertem Alkoholgehalt herzustellen. Einer der Gründe ist die Höchstgrenze für den Blutalkoholgehalt bei Kraftfahrern, der die Herstellung eines Getränkes mit reduziertem Alkoholgehalt wünschenswert erscheinen lässt. Ein anderer wichtiger Grund ist der, dass für die Diabetiker zwar voll ausgegorene Getränke zur Verfügung stehen, die jedoch wegen des gegenüber normal vergorenen Getränken höheren Alkoholgehalts für die Diabetiker nicht unbedenklich sind.

Unter den Bieren mit reduziertem Alkoholgehalt muss man im wesentlichen drei Typen unterscheiden:
1. Biere, deren Alkoholgehalt auf 2 bis 3 Gew.-% reduziert ist,
2. Biere, deren Alkoholgehalt auf weniger als 1,5 Gew.-% reduziert ist und die als alkoholarme Biere bezeichnet werden,
3. Biere, deren Alkoholgehalt unter 0,5 Gew.-% liegt und die als alkoholfreie Biere bezeichnet werden.

Biere mit reduziertem Alkoholgehalt wurden bisher auf zwei prinzipiell unterschiedlichen Wegen hergestellt, und zwar durch Wahl des Herstellungsverfahrens oder durch nachträgliche Behandlung eines auf üblichem Wege hergestellten Vollbieres.

Zu der ersten Kategorie gehören
— die Reduzierung der Stammwürze,
— die Einstellung niedriger Endvergärungsgrade und
— die Verwendung niedriggärender Hefen.

Während die nicht voll ausgegorenen Biere zwangsweise je nach Vergärungsgrad mehr oder weniger süsslich sein müssen und durch die nicht vergorene bzw. angegorene Würze einen besonderen Geschmack erhalten, werden Biere, die mit weniger Würze hergestellt werden (die sog. Schankbiere) als zu wässrig im Geschmack empfunden.

Bei der nachträglichen Behandlung normaler vergorener Biere wird der Alkohol in gewünschter Menge dem fertigen Bier durch
— Destillation unter Atmosphärendruck,
— Vakuumdestillation und
— Umkehrosmose
entzogen.

Darüber hinaus wurden noch die selektive Abtrennung von Alkohol mit Adsorberharzen und Gefriermethoden vorgeschlagen.

Während die Destillation unter Atmosphärendruck wegen Denaturierung der Eiweissstoffe, Erhöhung des Gehalts an Hydroximethylfurfurol und einer ganzen Reihe von im Detail nicht genau bekannten Umsetzungen diverser Bierinhaltstoffe, bei der erhöhten Temperatur zu einem im Geschmack stark veränderten Produkt führt, kann man diese Erscheinung bei Anwendung einer Vakuumdestillation zwar vermindern, aber nicht unterbinden, da die Biere durch die — wenn auch geringere — Temperaturerhöhung immer noch eine nachteilige Veränderung der Bitterstoffe erfahren.

Prinzipiell wurden bisher auch bei den Versuchen, andere vergorene Getränke, wie Wein, Obstwein oder Sekt mit reduziertem Alkoholgehalt herzustellen, analoge Verfahren angewendet, wie sie vor allem für das Bier bekannt geworden sind.

Der Erfindung am nächsten kommt die Abtrennung des Alkohols durch Umkehrosmose.

Beschrieben sind derartige Umkehrosmoseverfahren in der DE-A-2 135 938, der DE-A-2 243 800, der DE-A-2 333 094, weiterhin in den DE-A-2 409 609 und 2 415 917.

In der DT-A-2 135 938 beispielsweise wird die Herstellung von alkoholarmen bzw. alkoholfreien Bieren mit Hilfe der umgekehrten Osmose durch Cellulose-Acetat- oder Nylon-Membranen vorgeschlagen, wobei der auf der Bierseite erforderliche Druck von maximal 50 atü durch Kolbenpumpen mit Windkesselbetrieb erzeugt werden kann. Die Nachteile der dort beschriebenen Methode liegen klar auf der Hand: Zum einen wird dem Bier nicht nur Alkohol sondern auch Wasser entzogen, so dass das auf diese Weise aufkonzentrierte Bier anschliessend noch mit Wasser verdünnt oder durch Verschneiden mit einem normal vergorenen Einfachbier auf den gewünschten Alkoholgehalt und die ursprüngliche bzw. gewünschte Stammwürze eingestellt werden muss; eine solche Verfahrensweise muss aber zwangsläufig zu einer Geschmacksbeeinträchtigung führen; zum anderen sind zur Durchführung des dort vorgeschlagenen Verfahrens in jedem Fall ein hoher Systemdruck und ein hoher Differenzdruck an der Membran erforderlich, wobei die Förderung trotz Windkesselbetriebs pulsierend erfolgt und damit zwangsläufig zu Druckschwankungen im System und Differenzdruckschwankungen an der Membran führt.

Der grosse Nachteil der Umkehrosmose liegt also in dem hohen Systemdruck auf der Bierseite von etwa 30 bis 50 atü, dem ein Auslaufdruck von 4 atü gegenübersteht. Der sich ergebende hohe Differenzdruck von mehr als 25 bar bringt erhebliche apparative Schwierigkeiten mit sich, und neben dem Alkohol wird auch ein erheblicher Teil des Wassers aus dem Bier entfernt. Wie die oben genannten Offenlegungsschriften zeigen, werden deshalb besondere Verfahren erforderlich, durch die das Wasser dem Bier wieder zugeführt wird.

Aufgabe der vorliegenden Erfindung war es, bei einem nach einem üblichen Verfahren hergestellten vergorenen Getränk, wie Bier, Wein, Sekt und dergleichen den Alkoholgehalt in gewünschtem Ausmass zu reduzieren, ohne dass der Geschmack des Getränkes besonders beeinträchtigt wird.

Gelöst wurde diese Aufgabe durch ein Verfahren, welches dadurch gekennzeichnet ist, dass ein nach einem üblichen Gärverfahren hergestelltes vergorenes Getränk bei einem Differenzdruck von weniger als 5,0 bar an einer Dialysemembran entlang geleitet wird, während gleichzeitig an der anderen Seite der Dialysemembran eine Dialysatflüssigkeit strömt. Unter Differenzdruck wird der Druckunterschied, der zwischen beiden Seiten der Membran besteht, verstanden.

Bei der Dialyse erfolgt der Stoffaustausch praktisch nur durch Diffusion, so dass für das Ausmass des Stoffaustausches das Konzentrationsgefälle an der Membran bestimmend ist, während bei der Umkehrosmose der Differenzdruck die massgebliche Rolle spielt und wesentlich als der osmotische Druck sein muss. Beim erfindungsgemässen Verfahren wird der osmotische Druck nicht unbedingt erreicht und der Differenzdruck beträgt im allgemeinen sogar weniger als 1,0 bar. Vorzugsweise beträgt der Differenzdruck weniger als 0,5 bar, wobei das Verfahren auch durchführbar ist, wenn praktisch überhaupt kein Differenzdruck besteht.

Die Beeinträchtigung des Geschmackes bei dem bekannten Verfahren beruht, abgesehen von den bereits genannten Gründen, auch darauf, dass mit dem Alkohol bzw. Alkohol-Wasser-Gemisch ein Teil der niedermolekularen Inhaltsstoffe, wie z.B. Extraktstoffe, ebenfalls abgetrennt wird. Bei der Umkehrosmose kann man, ausgenommen bei einer hervorragenden Selektivität der Membran, die Abtrennung von niedermolekularen Inhaltsstoffen nicht verhindern.

Wenn die Selektivität der Membran nämlich zu gering ist, wandert ein gewisser Teil der niedermolekularen Inhaltsstoffe — im wesentlichen Extraktstoffe — mit dem Alkohol durch die Membranwand ab. Deshalb enthält in Ausgestaltung der Erfindung die Dialysatflüssigkeit Extraktstoffe des vergorenen Getränkes in einer geeigneten Konzentration, die den Durchtritt von Extraktstoffen des Getränkes verhindert. Man kann dazu ein nach einem beliebigen Verfahren hergestelltes, alkoholfreies, dem zu dialysierenden entsprechendes vergorenes Getränk verwenden. Beispielsweise lässt sich bei der Herstellung von Bier mit reduziertem Alkoholgehalt ein alkoholfreies Bier als Dialysatflüssigkeit einsetzen. Verwendet man eine extraktstoffhaltige Dialyseflüssigkeit, so ist es in weiterer Ausgestaltung der Erfindung von besonderem Vorteil, wenn der in der Dialysatflüssigkeit angereicherte Alkohol durch Adsorption, Extraktion, Umkehrosmose und/oder Destillation aus der Dialysatflüssigkeit entfernt wird. Die vom Alkohol befreite Dialysatflüssigkeit kann im Kreislauf wiederum als Dialysat-Flüssigkeit verwendet werden, was gerade für die Verhinderung eines Durchtrittes von Extraktstoffen durch die Membran von besonderem Vorteil ist, da sehr schnell ein Gleichgewichtszustand erreicht wird.

Bei kohlendioxidhaltigen vergorenen Getränken führt man das Verfahren bei erhöhtem Systemdruck durch, wobei jedoch der Differenzdruck wiederum äusserst gering gehalten wird, um Ultrafiltration zu vermeiden. Der Druck, bei dem die Dialyse durchgeführt wird, liegt oberhalb des Sättigungsgrades des im vergorenen Getränk gelösten Kohlendioxids, um Kohlendioxid auch an der Membranoberfläche noch in Lösung zu halten bzw. um Gasbildung beim Durchtritt von Kohlendioxid durch die Membran zu verhindern. Für Sekt ist es beispielsweise nicht erlaubt, die während des Herstellungsverfahrens verlorene Menge an Kohlendioxid nachträglich wieder zuzusetzen. Beim Bier wäre es zwar erlaubt, aber trotzdem ist es von Vorteil, wenn das Kohlendioxid im vergorenen Getränk in vollem Umfang in Lösung gehalten werden kann. Dazu kann in der Dialysatflüssigkeit eine der Kohlendioxidmenge des zu dialysierenden vergorenen Getränkes entsprechende Menge Kohlendioxid gelöst werden. So ist es möglich, dass das alkoholreduzierte vergorene Getränk mit dem üblichen Gehalt an Kohlendioxid die Dialyse verlässt und in gewohnter Weise gelagert werden kann.

In manchen Fällen ist es vorteilhaft, wenn das vergorene Getränk neben einer Dialyse auch einer Ultrafiltration unterworfen wird.

Durch Einstellung des Differenzdruckes lässt sich der Anteil an Ultrafiltrat sehr genau regulieren. Übliche Dialysemembranen mit einer Ultrafiltrationsrate von etwa 2 bis ca. 5 ml/m$^2$ h mm Hg gestatten eine sehr abgestufte und auf das gewünschte Mass begrenzte Ultrafiltration.

Insbesondere dann, wenn eine etwas höhere Ultrafiltration erwünscht ist, kann diese zusätzliche Ultrafiltration in Ausgestaltung der Erfindung dadurch erzielt werden, dass die zusätzliche Ultrafiltration durch die Verwendung einer Dialysemembran mit einer Ultrafiltrationsrate von 7 bis 30 ml/m$^2$ h mm Hg bewirkt wird. Eine solche Membran ist Gegenstand der DE-A-2 823 985.

Die zusätzliche Ultrafiltration kann auch dadurch erzielt werden, dass die zusätzliche Ultrafiltration durch Erhöhung des Differenzdruckes auf 0,5 bis 5,0 bar bewirkt wird.

In den meisten Fällen wird bereits eine Ultrafiltration in ausreichendem Masse stattfinden, um die gewünschte Geschmacksverbesserung zu erzielen, wenn man die Dialyse bei einem von 0,5 bar auf bis zu 1,0 bar ansteigenden und/oder erhöhten Differenzdruck durchführt.

Insbesondere, wenn als Dialysatflüssigkeit besonders zusammengesetzte Lösungen (mit Extraktstoffen) eingesetzt werden sollen, ist es zweckmässig, dass die Ultrafiltration in einer von der Dialysestufe getrennten Ultrafiltrationsstufe erfolgt.

Da in der Dialysestufe beim vergorenen Getränk die Gefahr eines Verlustes an Extraktstoffen besteht, ist es von Vorteil, dass die getrennte Ultrafiltrationsstufe der Dialysestufe nachgeschaltet ist.

Neben der Dialyse eine begrenzte Ultrafiltration zuzulassen, hat sich insbesondere zur Qualitätsverbesserung von Wein mit reduziertem Alkoholgehalt bewährt. Bei manchem Wein ist beispielsweise aufgrund ungünstiger Witterungsbedingungen der Extraktgehalt geringer, der sich dann in einem faden Geschmack auswirkt. Hier kann das erfindungsgemässe Verfahren ausser einer Alkoholreduzierung auch eine deutliche Geschmacksverbesserung bewirken.

Bei Sekt und Bier lässt sich in gleicher Weise eine Ultrafiltration neben der Dialyse einbeziehen, wenn dazu ein Bedürfnis besteht.

Es war auch Aufgabe der Erfindung, eine Vorrichtung zur Verfügung zu stellen, bei der die eingangs genannten Nachteile des Standes der Technik nicht auftreten und d arüber hinaus nicht nur zur Herstellung von alk olarmen bzw. alkoholfreien Bieren, sondern zur Verringerung des Alkoholgehalts auch anderer vergorener Getränke also beispielsweise Wein, Sekt und dergleichen sowie anderer üblicher alkoholhaltiger Getränke geeignet ist.

Diese Aufgabe wird durch eine Vorrichtung mit mindestens einer Trenn-Membran gelöst, die erfindungsgemäss eine Dialysemembran, ein Gehäuse zur Aufnahme der Membran bestehend aus einer mit einer ersten Zuführleitung und einer ersten Abführleitung verbundenen ersten Kammer und einer mit einer zweiten Zuführleitung und einer zweiten Abführleitung verbundenen zweiten Kammer, wobei die beiden Kammern durch die Membran und übliche flüssigkeitsundurchlässige Dichtelemente und/oder Trennwände voneinander getrennt sind, ein mit der ersten Kammer und ein mit der zweiten Kammer verbundenes gleichmässig arbeitendes Förderaggregat, je ein in der ersten und in der zweiten Zuführleitung angeordnetes Durchflussmengeneinstellorgan, ein Regelorgan zur Einstellung eines konstanten niedrigen Differenzdruckes zwischen der ersten und in der zweiten Abführleitung angeordnetes Durchflussmengeneinstellorgan, ein Regelorgan zur Einstellung eines konstanten niedrigen Differenzstruckes zwischen der ersten Kammer und der zweiten Kammer, ein Regelorgan zur Einstellung eines beliebigen, jedoch höchstens geringfügig unterschiedlichen Druckniveaus in den beiden Kammern sowie eine Einrichtung zum Temperieren der durch die erste Kammer und/oder der durch die zweite Kammer strömenden Flüssigkeit aufweist. Als für die Verwendung in der erfindungsgemässen Vorrichtung geeignete Membranen haben sich sowohl Dialyse-Hohlfasern als auch Dialyse-Schlauch- oder Flachfolien erwiesen, wobei diese in gerader bzw. ebener oder gekrümmter Form in der erfindungsgemässen Vorrichtung angeordnet sein können.

Eine für die erfindungsgemässe Vorrichtung besonders hervorragend geeignete Membran ist eine solche, die sich durch Regeneration von Cellulose aus Kupferammonium-Celluloselösungen herstellen lässt.

Besonders gute Ergebnisse werden mit der erfindungsgemässen Vorrichtung dann erreicht, wenn die verwendete Membran für Moleküle mit einem Molekulargewicht von mehr als 100 eine geringe Permeabilität aufweist, wobei eine solche Membran zu bevorzugen ist, die eine möglichst hohe Selektivität, also eine möglichst scharfe Trenngrenze aufweist.

Der Vorteil einer Membran mit einer scharfen Trenngrenze besteht darin, dass durch diese fast ausschliesslich nur de Alkohol hindurchtritt, während andere niedermo lare Inhaltsstoffe wie beispielsweise Zucker, B rstoffe, Aromastoffe und dergleichen nur in weit s geringerem Masse oder überhaupt nicht durch die Membran hindurchtreten.

Ein weiterer Vorteil, den die Dialyse-Membran bietet, besteht darin, dass es dabei zur im wesentlichen selektiven Abtrennung des Alkohols keiner hohen Differenzdrücke an der Membran bedarf wie beispielsweise bei der umgekehrten Osmose.

Besonders gute Ergebnisse werden bei Verwendung einer solchen Membran in der erfindungsgemässen Vorrichtung dann erreicht, wenn der Differenzdruck zwischen der ersten und der zweiten Kammer, der im allgemeinen im wesentlichen dem auf die Membran wirkenden Differenzdruck entspricht, äusserst gering ist. Besonders gute Ergebnisse werden dann erreicht, wenn der Differenzdruck nicht mehr als 0,1 bar beträgt, wobei gute Ergebnisse auch noch bei einem Differenzdruck von 0,5 bar und gegebenenfalls bis zu 5,0 bar erreicht werden können.

Zum Einstellen des jeweils günstigsten Differenzdruckes an der Membran sind an der erfindungsgemässen Vorrichtung daher entsprechend den betrieblichen Erfordernissen zu bemessende möglichst feinfühlige Regelorgane in der ersten und in der zweiten Zuführ- und/oder Abführleitung angeordnet.

Als besonders vorteilhaft hat es sich erwiesen, wenn die Membran in Form eines Membranmoduls vorliegt, der lösbar mit dem Gehäuse verbunden ist. Eine solche Ausführungsform nämlich gestattet es, die Membran auf einfache Weise, nämlich durch Auswechseln des kompletten Moduls, gegen eine andere auszutauschen.

Aufgrund ihrer kompakten Bauweise, d.h. grossen Austauschfläche auf kleinem Raum, haben sich insbesondere Hohlfasermodule bewährt, bei denen die Membran aus einer Vielzahl von Hohlfasern besteht. Die Hohlfasern können hierbei in Form von geraden im wesentlichen parallel zueinander verlaufenden Hohlfäden oder aber beispielsweise auch in Form von regelmässigen und/oder unregelmässigen Schlaufen, sich räumlich ausdehnenden Wendeln und/oder in Ebenen liegenden Spiralen vorliegen, wobei die Hohlfäden auch in mehreren Lagen derart angeordnet sein können, dass die Hohlfäden in jeder Lage die Hohlfäden jeder der benachbarten Lagen, gegebenenfalls mehrfach, kreuzen, wobei die offenen Enden der Hohlfäden in einer Vergussmasse eingebettet sind, ohne dass hierdurch der freie Durchtritt durch die Hohlfäden behindert wird. Der Membranmodul kann beliebige Querschnittsform haben.

Das Gehäuse zur Aufnahme der vorzugsweise in Modulform vorliegenden Dialysemembran, die Zuführ- und Abführleitungen, die Dichtelemente, die Trennwände, das Förderaggregat sowie auch die die erfindungsgemässe Vorrichtung kennzeichnenden Regelorgane können aus allen üblichen metallischen oder nicht-metallischen Werkstoffen gefertigt werden, wobei bei der Werkstoffauswahl zumindest für die mit den Flüssigkeiten in Berührung kommenden Teile der erfindungsgemässen Vorrichtung die für die Lebensmittelindustrie gültigen Gesetze und Vorschriften zu beachten sind.

Bei der Bemessung der verschiedenen Teile der erfindungsgemässen Vorrichtung wird man im allgemeinen die Abmessungen der anderen in dem jeweiligen Betrieb verwendeten Anlagen und Einrichtungen bzw. die in der Technik allgemein üblichen zugrundelegen.

Eine für einen entsprechend weit über Atmosphärendruck liegenden Betriebsdruck bemessene Ausführungsform der erfindungsgemässen Vorrichtung gestattet es, die Verringerung des Alkoholgehalts einer Flüssigkeit unter Beibehaltung des für das jeweils zu lösende Trennproblem günstigsten Differenzdruckes an der Trennmembran in vorteilhafter Weise bei einem solchen Druck durchzuführen, bei dem das bei Atmosphärendruck beispielsweise bei Sekt erfolgende plötzliche Austreten eines Teils des darin gelösten Kohlendioxids oder das bei Bier auftretende Schäumen nicht stattfindet.

Eine für den Nenndruck 16 bemessene Ausführungsform der erfindungsgemässen Vorrichtung wird in den meisten Fällen den allgemein üblichen betrieblichen Anforderungen gerecht werden. Jedoch kann die Vorrichtung mit Vorteil auch für höhere Drücke bemessen werden.

Im Hinblick auf eine gleichbleibende Qualität des behandelten Getränkes und einer möglichst gleichbleibenden Abtrennleistung der Membran sowie nicht zuletzt im Hinblick auf die vorteilhafte niedrige Druckdifferenz an der Membran hat es sich als besonders vorteilhaft erwiesen, wenn die Förderung der zu behandelnden Flüssigkeit, also des Getränkes oder des Getränkeproduktes, einerseits und diejenige der den Alkohol aufnehmenden Flüssigkeit, also des Dialysats, andererseits möglichst gleichmässig, unter gar keinen Umständen aber pulsierend oder stossweise, erfolgt. Für die Förderung der beiden Flüssigkeiten entlang den Membranoberflächen eignen sich beispielsweise Pumpen, welche diese Förderung erfüllen, wobei sich ein Förderaggregat, welches ohne bewegte Teile und nur mit statischem Druck arbeitet, als besonders hierfür geeignet erwiesen hat.

Ein solches Aggregat besteht beispielsweise aus einem Flüssigkeitsbehälter, in welchem mittels bekannter Massnahmen und Einrichtungen ein gleichbleibendes Flüssigkeitsniveau eingestellt bzw. gehalten wird. Zur Erhöhung des statischen Druckes kann ein solcher Behälter in geschlossener Bauweise ausgeführt sein, der zusätzlich an eine Druckgasleitung zur Erzeugung eines Druckgaspolsters oberhalb des Flüssigkeitsspiegels in dem Behälter angeschlossen ist. Als besonders vorteilhaft hat es sich dabei erwiesen, hierzu ein sauerstofffreies Gas, insbesondere Kohlendioxid und/oder Stickstoff zu verwenden. Durch die Verwendung eines solchen Gases nämlich wird in hervorragender Weise eine Schädigung oder anderweitige Beeinträchtigung der zu behandelnden Flüssigkeiten durch Sauerstoff, wie sie häufig bereits beim In-Berührung-Kommen mit Luft stattfinden, verhindert. Der Vorteil eines solchen Förderaggregats ist nicht nur im Fehlen bewegter, dem Verschleiss unterworfener Teile zu sehen, sondern auch darin, dass die Flüssigkeiten hiermit schonend und unter Luftabschluss gefördert werden können, ohne dass Luftsauerstoff, unerwünschter Abrieb von Pumpen oder Pumpendichtungen und dergleichen in die Flüssigkeiten gelangt. In Verbindung mit äusserst präzise arbeitenden Durchflussmengeneinstellorganen ist mit einem solchen Förderaggregat ein besonders gleichmässiger Volumenstrom pro Zeiteinheit zu erreichen.

Als zur Gewährleistung einer zeitlich konstanten Durchflussmenge besonders gut geeignet haben sich beispielsweise sogenannte Lochblenden erwiesen. Eine Veränderung der Durchflussmenge durch derartige Lochblenden ist bekanntlich beispielsweise durch Änderung des Vordruckes möglich. Wird eine Möglichkeit zur Veränderung der Durchflussmenge bei gleichbleibendem Vordruck gewünscht, können erfindungsgemäss sogenannte Nadelventile als Durchflussmengen-Einstellorgane verwendet werden, da diese sowohl eine feinfühlige Mengeneinstellung ermöglichen als auch eine Konstanthaltung der einmal eingestellten Durchflussmenge über lange Zeiträume gewährleisten. Die Durchflussmengeneinstellorgane können vor und/oder nach dem Gehäuse mit der darin angeordneten Trennmembran angeordnet sein.

Darüber hinaus können auch andere geeignete und in der Technik für derartige Zwecke übliche Organe zur Einstellung konstanter Durchflussmengen verwendet werden, sofern sie die jeweils gestellten Anforderungen an einen zeitlich möglichst konstanten Volumenstrom erfüllen. Die genannten Einstellorgane können auch mittels elektrischer, pneumatischer, hydraulischer und dergleichen Antriebseinrichtungen ausgestattet sein, die an übliche Mess- und Regeleinrichtungen angeschlossen sind, so dass die Durchflussmengen automatisch überwacht und kontrolliert und gegebenenfalls korrigiert werden können oder eine gewünschte Durchflussmengenänderung durch Fernbedienung vorgenommen werden kann. Das gleiche gilt sinngemäss für die Einstellung und Veränderung der Flüssigkeitshöhe bzw. des Gaspolsterdruckes des oben beschriebenen Förderaggregats.

Wird beispielsweise ein konstantes Durchflussmengenverhältnis von Getränk und Dialysat gewünscht, so werden die entsprechenden Durchflussmengeneinstellorgane in vorteilhafter Weise derart miteinander gekoppelt, dass die Veränderung der einen Flüssigkeitsmenge eine Veränderung der anderen Flüssigkeitsmenge bewirkt, und zwar in dem vorgegebenen Verhältnis. Ebenso kann es vorteilhaft sein, ein durchflussmengenabhängiges Mengenverhältnis der beiden Flüssigkeiten vorzugeben, welches sich dann ebenfalls bei Änderung einer der beiden Durchflussmengen jeweils automatisch einstellt.

Um die zu behandelnden Flüssigkeiten, beispielsweise die fertigen oder halbfertigen Getränke, auf niedrigeren Temperaturen halten zu können, als der Raumtemperatur entspricht, weist die erfindungsgemässe Vorrichtung eine Einrichtung zum Temperieren der durch die erste Kammer und/oder der durch die zweite Kammer strömenden Flüssigkeit auf. Eine solche Einrichtung kann im einfachsten Falle, nämlich dann, wenn die zu behandelnde Flüssigkeit bereits vorgekühlt ist, eine Wärmeisolierung aller oder zumindest eines Teils der Teile der erfindungsgemässen Vorrichtung sein. Es ist jedoch auch möglich, durch Verwendung solcher Rohre, Behälter und anderer Anlageteile, die einen Heiz-/Kühlmantel aufweisen, das Temperieren der Flüssigkeiten mittels eines entsprechend beheizten oder gekühlten Fluids zu erreichen, wobei es hierbei auch möglich ist, die beiden Flüssigkeiten vor und/oder nach der Behandlung auf ein unterschiedliches Temperaturniveau zu bringen.

Um zu verhindern, dass bei der Behandlung von Flüssigkeiten, in denen ein Gas gelöst ist, beispielsweise Kohlendioxid wie bei Sekt, eine Reduzierung des Gehalts an gelöstem Gas in der zu behandelnden Flüssigkeit durch Diffusion desselben durch die Trennmembran eintritt, wird eine Ausgestaltungsform der erfindungsgemässen Vorrichtung vorgeschlagen, bei der wenigstens in der ersten oder in der zweiten Zuführleitung und/oder in der ersten oder in der zweiten Abführleitung ein Gas-Dosieraggregat, insbesondere ein Kohlendioxid-Dosieraggregat angeordnet ist.

Eine solche Einrichtung gestattet es, beispielsweise in der Behandlungsflüssigkeit, also dem Dialysat, zuvor eine entsprechende Menge des in der zu behandelnden Flüssigkeit gelösten Gases zu lösen, um auf diese Weise die oben beschriebene Diffusion des Gases durch die Membran zu verhindern. Eine andere Möglichkeit, den Verlust an in der zu behandelnden Flüssigkeit gelöstem Gas auszugleichen, besteht darin, nur in dieser eine entsprechende Gasmenge zusätzlich zu lösen, so dass die Flüssigkeit nach der Behandlung den gewünschten Gasgehalt aufweist. Schliesslich ist es möglich, den durch die Behandlung mit der Dialysemembran verlorengegangenen Gasanteil der behandelten Flüssigkeit erst nach der Behandlung wieder zuzusetzen. Auch ist eine Kombination dieser drei beispielshalber beschriebenen Methoden denkbar. Welche der beschriebenen Methoden letztlich die geeignetste ist, lässt sich auf einfache Weise durch entsprechende Versuche ermitteln bzw. hängt in vielen Fällen von bereits bestehenden Vorschriften, Verordnungen, Gesetzen und dergleichen ab.

Das Lösen von Gas in einer der beiden oder in beiden Flüssigkeiten, insbesondere von Kohlendioxid, wird in besonders vorteilhafter Weise jedoch in dem dann in geschlossener Bauweise auszuführenden Behälter des Förderaggregats durchgeführt. In diesem Fall wird mit der erfindungsgemässen Vorrichtung in hervorragender Weise jeglicher Kontakt der so beaufschlagten Flüssigkeit mit dem Sauerstoff der Luft verhindert, eine gleichmässige und schonende Förderung der Flüssigkeit gewährleistet, das zum Einstellen eines beliebig hohen Druckniveaus erforderliche Gasdruckpolster gebildet und das Lösen des Gases in der Flüssigkeit bewirkt.

Auch kann eine Beaufschlagung der Flüssigkeiten mit einem Gasgemisch, beispielsweise einem solchen aus Stickstoff und Kohlendioxid, vorteilhaft sein. Zu diesem Zweck können an geeigneter Stelle zusätzliche Gasanschlüsse vorgesehen werden, oder es kann bereits ein Gasgemisch mit der gewünschten Zusammensetzung zugeführt werden. Eine solche Fahrweise ist beispielsweise dann von grossem Vorteil, wenn einerseits zwar ein hohes Gasdruckpolster erforderlich ist, andererseits jedoch nur die einem geringeren Partialdruck entsprechende Menge der Gase in der Flüssigkeit gelöst werden soll bzw. darf. Diese Fahrweise bietet insbesondere auch dann grosse Vorteile, wenn beispielsweise bei Sekt für das Gasdruckpolster ein höherer Druck eingestellt werden muss, als dem Partialdruck des darin gelösten Kohlendioxids entspricht. In diesem Fall nämlich würde bei einem nur aus Kohlendioxid bestehenden Gaspolster unerlaubterweise zusätzlich Kohlendioxid im Sekt gelöst werden. Bei einem Gaspolster aus beispielsweise reinem Stickstoff wiederum würde selbst bei einem über dem Partialdruck des in dem Sekt gelösten Kohlendioxids liegenden Druck Kohlendioxid durch Diffusion aus dem Sekt in die Stickstoff-Atmosphäre entweisen.

Je nach Art und Grösse des Betriebes sowie abhängig von dem zeitlichen Volumenstrom der mit der erfindungsgemässen Vorrichtung zu behandelnden Flüssigkeit kann es in weiterer Ausgestaltung der Erfindung zweckmässig sein, anstatt eines grossen Dialysemembranmoduls mehrere kleinere Dialysemembranmoduln, von denen jeder gegebenenfalls in einem eigenen Gehäuse untergebracht ist, zu verwenden und in Parallelschaltung anzuordnen, so dass durch jeden Modul dann nur ein — gegebenenfalls mittels entsprechend angeordneter Einstellorgane beliebig einstellbarer — Teilstrom des gesamten Volumenstroms geführt werden kann.

Eine solche Anordnung gestattet es gegebenenfalls auch, einen einzelnen Modul während des Betriebes der erfindungsgemässen Vorrichtung auszuwechseln, ohne den Betrieb der gesamten Vorrichtung während des Auswechselns unterbrechen zu müssen, oder aber eine entsprechende Anzahl von Ersatzmoduln vorzusehen, auf die im Bedarfsfall ohne Unterbrechung oder Verringerung des Gesamtvolumenstroms umgeschaltet werden kann.

Eine Hintereinanderschaltung von zwei oder mehreren Membranmoduln kann beispielsweise dann zweckmässig sein, wenn der Alkoholgehalt einer Flüssigkeit schrittweise immer weiter, gegebenenfalls bis auf einen Wert nahe Null, verringert werden soll.

Zur Kontrolle und Überwachung der einmal eingestellten Volumenströme können vorteilhafterweise bekannte Durchflussmengenmessgeräte an geeigneter Stelle in den jeweiligen Zuführ- und/oder Abführleitungen angeordnet sein.

Bei der Verwendung mehrerer parallelgeschalteter Membranmoduln erweist es sich dabei als äusserst zweckmässig, für jeden Modul einen eigenen Durchflussmesser und eigene Einstellorgane vorzusehen.

Bezüglich der Strömungsrichtung der beiden Flüssigkeiten entlang der Membranoberflächen können diese je nach Ausgestaltung der erfindungsgemässen Vorrichtung im Gleich-, Gegen- oder Kreuzstrom zueinander geführt werden. Auch sind Zwischenformen, wie beispielsweise der Kreuz-Gegenstrom oder der Kreuz-Gleichstrom möglich. Die Frage, welche der vielen Möglichkeiten die geeignetste ist, hängt vom Einzelfall ab und wird häufig nicht nur von dem für den Stoffaustausch günstigsten Strömungsverlauf bestimmt, sondern wird auch von strömungstechnischen Überlegungen oder wie im vorliegenden Fall beispielsweise durch die Forderung nach einem möglichst niedrigen Differenzdruck an der Membranoberfläche beeinflusst werden.

Zur weiteren Erläuterung der Erfindung werden nachfolgend die Figuren beschrieben.

Es zeigen:

Fig. 1 in vereinfachter schematischer Darstellungsweise eine erfindungsgemässe Vorrichtung,

Fig. 2 in vereinfachter schematischer Darstellungsweise einen Ausschnitt einer Ausführungsform der erfindungsgemässen Vorrichtung, bei der mehrere Membranmoduln in Parallelschaltung angeordnet sind.

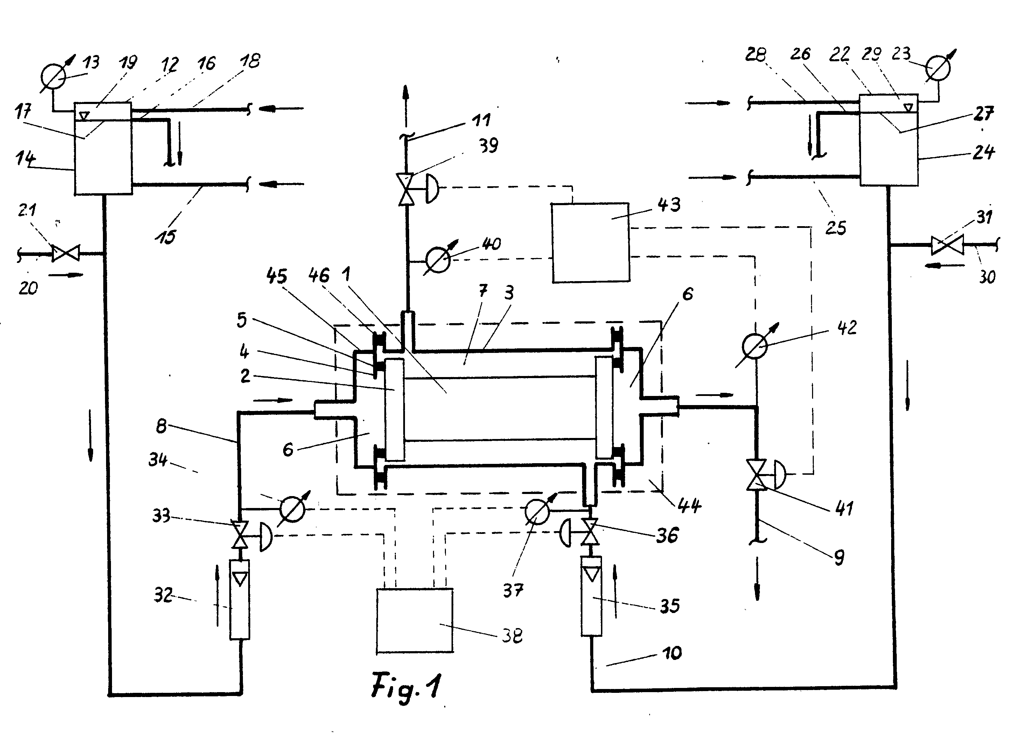

Die in Fig. 1 dargestellte Ausführungsform der erfindungsgemässen Vorrichtung besteht zunächst aus der in Modulform ausgebildeten Trennmembran 1, die in dem Gehäuse 3 angeordnet ist, wobei die stirnseitig angeordneten, aus einer Vergussmasse bestehenden, Flansche 2 des Membranmoduls zusammen mit den Dichtringen 5 und den Trennwänden 4 des Gehäuses 3 eine flüssigkeitsundurchlässige Trennung der ersten Kammer 6 von der zweiten Kammer 7 des Gehäuses 3 bewirken. Der Membranmodul ist dabei lösbar mit dem Gehäuse 3 verbunden, so dass er nach Entfernen der oder eines der mit dem Gehäusemantel über die Dichtungen 46 verbundenen lösbar angeordneten Stirnteile 45 herausgenommen und gegen einen anderen Modul ausgewechselt werden kann. Die erste Kammer 6 ist an eine erste Zuführleitung 8 und eine erste Abführleitung 9, die zweite Kammer 7 an eine zweite Zuführleitung 10 und eine zweite Abführleitung 11 angeschlossen. Die erste Zuführleitung 8 ist an ein nur mit statischem Druck arbeitendes erstes Förderaggregat 12 und die zweite Zuführleitung 10 an ein ebensolches zweites Förderaggregat 22 angeschlossen. Beide Förderaggregate 12 bzw. 22 bestehen aus je einem geschlossenen Flüssigkeitsbehälter 14 bzw. 24, einer Flüssigkeitszuführleitung 15 bzw. 25, einer Flüssigkeitsüberlaufleitung 16 bzw. 26 zur Einstellung eines stets gleichbleibenden Flüssigkeitsniveaus 17 bzw. 27 sowie einer Gaszuführleitung 18 bzw. 28 zur Erzeugung eines Gasdruckpolsters 19 bzw. 29 oberhalb des Flüssigkeitsspiegels 17 bzw. 27, wobei der Druck des Gaspolsters 19 bzw. 29 mittels des Manometers 13 bzw. 23 gemessen und überwacht werden kann. Beide Zuführleitungen 8 und 10 sind darüber hinaus über das Absperrorgan 21 bzw. 31 an eine Gaszuführleitung 20 bzw. 30 angeschlossen. Zur Kontrolle der zeitlichen Durchflussmenge der zu behandelnden Flüssigkeit, des Getränkes, und der Behandlungsflüssigkeit, des Dialysats, ist in den beiden Zuführleitungen 8 bzw. 10 ein Durchflussmengenmessgerät 32 bzw. 35 vorgesehen. Zur Einstellung der Durchflussmenge dienen die beiden an den gemeinsamen Regler 38 angeschlossenen Regelventile 33 und 36 und zur Überwachung des möglichst niedrigen Differenzdruckes zwischen der ersten Kammer 6 und der zweiten Kammer 7 die mit demselben Regler 38 verbundenen Druckmess- und -regelorgane 34 bzw. 37. In den Abführleitungen 11 bzw. 9 ist noch je ein mit dem Regelgerät 43 verbundenes Regelventil 39 bzw. 41 sowie ein Druckmess- und -regelorgan 40 bzw. 42 angeordnet. Die beiden Regelgeräte 38 und 43 können ebenfalls miteinander gekoppelt sein bzw. zusammen eine Einheit bilden. Eine solche Schaltung gestattet es, in weiten Grenzen bei vorgegebenen Durchflussmengen in den beiden Gehäusekammern 6 und 7 das gewünschte Druckniveau und gleichzeitig die gewünschte, im allgemeinen möglichst niedrige Druckdifferenz an der Trennmembran einzustellen. Falls gewünscht, kann das Gehäuse 3 noch mit einem wärmeisolierenden Mantel 44 umgeben sein. Darüber hinaus können auch die Rohrleitungen und/oder Armaturen wärmeisoliert sein bzw. können temperierbare Rohre und/ oder Armaturen verwendet werden. Es ist jedoch auch möglich, die gesamte erfindungsgemässe Vorrichtung in einem entsprechend temperierten Raum anzuordnen. In Fig. 1 nicht dargestellt sind die üblichen je nach Betrieb unterschiedlichen der erfindungsgemässen Vorrichtung vor- und nachgeschalteten Einrichtungen.

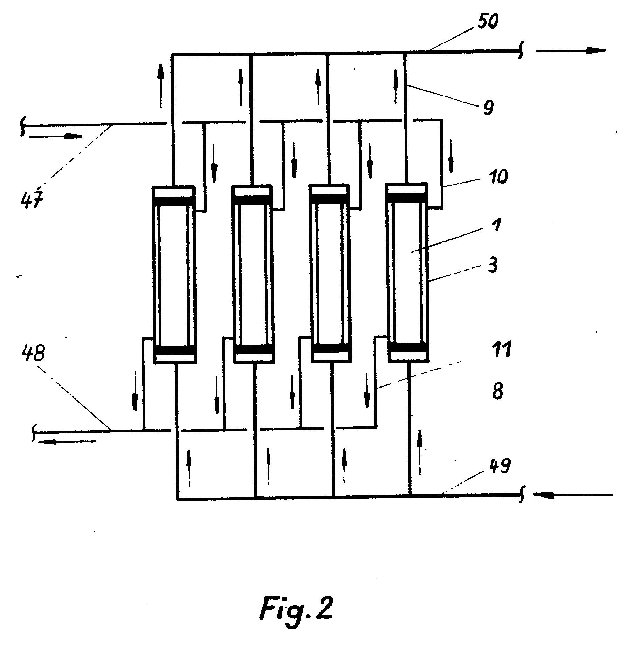

Fig. 2 zeigt die Parallelschaltung von vier in je einem Gehäuse 3 angeordneten Membranmoduln 1, wobei die weiteren Teile dieser Ausführungsform der erfindungsgemässen Vorrichtung, wie Fig. 1 sie zeigt, der besseren Übersicht wegen nicht dargestellt sind. Jeder Modul ist hierbei mit seiner ersten Zuführ- und Abführleitung 8 bzw. 9 an eine gemeinsame erste Hauptzuführleitung 49 bzw. erste Hauptabführleitung 50 und mit seiner zweiten Zuführ- und Abführleitung 10 bzw. 11 an eine gemeinsame zweite Hauptzuführleitung 47 bzw. zweite Hauptabführleitung 48 angeschlossen. Zum Regeln und Messen der durch jeden einzelnen Modul geleiteten gegebenenfalls auch unterschiedlich grossen Teilströme können in jeder Zuführleitung 8 bzw. 10 und/oder in jeder Abführleitung 9 bzw. 11 entsprechende Mess- und Regel- bzw. Einstellorgane vorgesehen werden, beispielsweise wie in Fig. 1 dargestellt. Die Hauptzuführleitungen 47 und 49 sind an je ein nicht dargestelltes Förderaggregat angeschlossen.

Das erfindungsgemässe Verfahren wird anhand der Alkoholreduzierung von Bier in den nachfolgenden Beispielen näher erläutert. Bei Wein, Sekt, Obstwein, Reiswein und anderen vergorenen Getränken erhält man ohne wesentliche Änderungen des Verfahrens entsprechend geschmacklich einwandfreie vergorene Getränke mit reduziertem Alkoholgehalt.

Beispiel 1

Es wurde von einem bekannten handelsüblichen Bier, welches zu den unter der Bezeichnung «Pils» verkauften Bieren gehört, ausgegangen. Bei einem Stammwürzegehalt von 12% wies das Pils einen Alkoholgehalt von 3,91 Gew.-% und einen Extraktgehalt von 3,93% auf.

Die Bestimmung des Alkoholgehalts erfolgte nach der in den Arbeitsvorschriften zur «Chemisch-Brautechnischen Betriebskontrolle» von Bausch, Billig; Silber-Eisen (Verlag Paul Barey 1963) auf Seite 101 beschriebenen Methode, die in der Brauindustrie üblicherweise angewendet wird.

Die Bestimmung des Extraktgehalts erfolgte nach der ebenfalls in den «Arbeitsvorschriften zur Chemisch-Brautechnischen Betriebskontrolle» Seite 101 beschriebenen Methode, die in der Brauindustrie ebenfalls allgemein üblich ist.

Zur Dialyse wurde ein Dialysator mit einem Bündel Cellulosehohlfäden, die aus Kupferammoniumcelluloselösungen ersponnen waren, als Membran eingesetzt. Entsprechende Dialysehohlfadenmembraneinheiten sind von der Hämodialyse gut bekannt. Die Austauschfläche der Hohlfadenmembraneinheit betrug 1,3 m². Bei einer Temperatur von 10°C und einem Systemdruck von 4 bar wurde durch die Hohlfäden Bier mit einer Geschwindigkeit von 30 l/h · m² geleitet, während an der Aussenseite der Hohlfäden 11,5 l/h m² Wasser als Dialysatflüssigkeit gleicher Temperatur vorbeigeleitet wurde. Der Differenzdruck betrug dabei 0,05 bar, wobei das Bier den etwas höheren Druck aufwies.

Nach Einstellung des Gleichgewichtes wurde ein Bier erhalten, welches im Alkoholgehalt um 30% reduziert war, wobei sich der Extraktgehalt nur um ca. 10% senkte. Die geschmackliche Prüfung ergab, dass ein mit dem ursprünglich eingesetzten Bier im Geschmack voll vergleichbares Pils erhalten worden war.

Durch Verringerung des Durchsatzes an Bier bei unveränderter Menge Dialysatflüssigkeit auf etwa ein Drittel, ergibt sich eine Reduzierung des Alkoholgehalts um 65% und damit ein Bier, das bereits als alkoholarmes Bier bezeichnet werden kann. Es ist im Geschmack deutlich voller als ein Bier mit gleichem Alkoholgehalt, das mit Hilfe der bekannten Verfahren hergestellt wurde. Wenn die Dialysatflüssigkeit Bierextraktstoffe enthält, dann ist der Geschmack durchaus mit dem des Ausgangsbieres wieder vergleichbar.

Will man sogenanntes alkoholfreies Bier herstellen — also mit einem Alkoholgehalt von etwa 0,5 Gew.-% — dann gelingt dieses, indem der Durchsatz an Bier bei unveränderter Dialysatflüssigkeitsmenge nochmals auf die Hälfte zurückgenommen wird.

Auch hier erhält man geschmacklich bessere Biere, wenn der Dialysatflüssigkeit Bierextraktstoffe zugesetzt werden.

Beispiel 2

Ein Bier mit den gleichen Kennzahlen wie im Beispiel 1 wurde an einem Hohlfadendialysator mit 1,3 m² Austauschfläche mit verschiedenen Geschwindigkeiten der Flüssigkeitsströme bei 10°C dialysiert. Ausgehend von einem Stammwürzegehalt von 12%, einem Alkoholgehalt von 3,91% und einem Extraktgehalt von 3,93% wurden die in der nachfolgenden Tabelle zusammengestellten Analysenwerte nach der Dialyse erhalten. Druck und Differenzdruck entsprechen Beispiel 1.

Tabelle

| Geschwindigkeit | | Alkohol-gehalt im Bier | Extrakt-gehalt im Bier |
|---|---|---|---|
| | (vor der Dialyse | 3,91% | 3,93%) |
| a) | 23,0 l/h · m² Bier<br>23,0 l/h · m² Wasser | 2,33% | 3,40% |
| b) | 11,5 l/h · m² Bier<br>11,5 l/h · m² Wasser | 1,93% | 3,07% |
| c) | 6,9 l/h · m² Bier<br>6,9 l/h · m² Wasser | 1,12% | 2,62% |
| d) | 4,6 l/h · m² Bier<br>4,6 l/h · m² Wasser | 0,74% | 2,29% |

Beispiel 3

In einem Hohlfaserdialysator mit einer Austauschfläche von 1,3 m² (entsprechend den Beispielen 1 und 2) wurde in analoger Weise Wein dialysiert. Bei einem Systemdruck von 4 bar und einer Temperatur von 10°C wurde durch die Hohlfäden Wein geleitet, während an der Aussenseite der Hohlfäden vollentsalztes Wasser als Dialysatflüssigkeit gleicher Temperatur vorbeigeleitet wird. Der Differenzdruck betrug dabei 0,05 bar (bzw. beim Versuch d 0,5 bar), wobei der Wein den höheren Druck aufwies. Die beim dialysierten Wein enthaltenen Kennzahlen sind in der folgenden Tabelle zusammengestellt. Der eingesetzte Wein hatte einen Alkoholgehalt von 67,9 g/l, einen Extraktgehalt von 20,5 g/l und einen Säuregehalt von 6,85 g/l (berechnet als Weinsäure).

| Geschwindigkeit | | Alkohol-gehalt | Extrakt-gehalt | Säure-gehalt |
|---|---|---|---|---|
| | | beim dialysierten Wein | | |
| a) | 13,6 l/h · m² Wein<br>4,6 l/h · m² Wasser | 49,7 g/l | 15,0 g/l | 5,1 g/l |
| b) | 18,7 l/h · m² Wein<br>4,6 l/h · m² Wasser | 49,4 g/l | 16,2 g/l | 5,5 g/l |
| c) | 27,7 l/h · m² Wein<br>4,6 l/h · m² Wasser | 54,0 g/l | 15,5 g/l | 5,9 g/l |
| d) | 17,9 l/h · m² Wein<br>4,6 l/h · m² Wasser | 52,9 g/l | 16,6 g/l | 5,6 g/l |

Beispiel 4

Mit dem gleichen Dialysator und unter sonst gleichen Bedingungen wurde die Dialysatflüssigkeit jeweils nach dem Durchlauf durch Vakuumdestillation von Alkohol befreit, mit vollentsalztem Wasser das Volumen aufgefüllt und erneut als Dialysatflüssigkeit wiederverwendet. Ausgegangen wurde dabei von einem Wein mit 80,8 g/l Alkohol, 21,2 g/l Extrakt und 8,2 g/l Säure. Als 1. Dialysatflüssigkeit diente vollentsalztes Wasser. Die bis zur Einstellung des Gleichgewichtes in den ersten Durchläufen erhaltenen Ergebnisse beim dialysierten Wein gehen aus der nachfolgenden Tabelle hervor. Der Differenzdruck betrug bei diesen Versuchen 0,15 bar.

| Durch-lauf | Geschwindigkeit | Alkohol-gehalt | Extrakt-gehalt | Säure-gehalt |
|---|---|---|---|---|
| | | beim dialysierten Wein | | |
| 1) | 13,9 l/h · m² Wein<br>4,8 l/h · m² Wasser | 56,9 g/l | 15,7 g/l | 6,03 g/l |
| 2) | 13,2 l/h · m² Wein<br>4,7 l/h · m² Dialysatfl. | 60,1 g/l | 18,8 g/l | 7,3 g/l |
| 3) | 12,7 l/h · m² Wein<br>4,5 l/h · m² Dialysatfl. | 58,1 g/l | 20,1 g/l | 7,7 g/l |
| 4) | 12,9 l/h · m² Wein<br>4,6 l/h · m² Dialysatfl. | 55,8 g/l | 20,5 g/l | 8,04 g/l |

Beispiel 5

Zwei Dialysatoren mit je 1,9 m² Austauschfläche und einem Stahlgehäuse wurden zur Dialyse von Schaumwein (Sekt) hintereinandergeschaltet.

Als Dialysatflüssigkeit diente ein Sekt, dem durch Vakuumdestillation der Alkohol entzogen war und der mit vollentsalztem Wasser auf das ursprüngliche Volumen verdünnt und mit Kohlendioxid gesättigt wurde.

Der Systemdruck betrug 4,7 bar. Der Differenzdruck am Auslauf betrug 0,20 bar und die Temperatur 10°C. Durch den Dialysator wurde Sekt mit einer Geschwindigkeit von 1,39 l/h · m² geleitet, während an der anderen Seite der Membran die beschriebene Dialysatflüssigkeit mit einer Geschwindigkeit von 1,38 l/h · m² vorbeigeleitet wurde. Der Alkoholgehalt des Sektes war durch die Dialyse von ursprünglich 89,2 g/l auf 51,3 g/l gesenkt worden. Der Extraktgehalt von 22,3 g/l und der Säuregehalt von 9,4 g/l änderten sich dabei nicht. Der Geschmack entsprach voll dem eines handelsüblichen Sektes.

Zur Durchführung von weiteren Versuchsreihen wurde eine der in Fig. 1 dargestellten Ausführungsform entsprechende erfindungsgemässe Vorrichtung verwendet, bei welcher wahlweise auf bis zu fünf parallelgeschaltete Hohlfasereinheiten umgeschaltet werden konnte. Die Anordnung der Einheiten entsprach dabei dem in Fig. 2 dargestellten Schaltprinzip, wobei die einzelnen Einheiten gleiche Grösse und eine gleichgrosse Austauschfläche (Membranfläche) besassen. Jede Einheit war in einem eigenen Gehäuse angeordnet. Die durch jede Einheit strömenden Flüssigkeitsmengen konnten mit Hilfe von für jede Einheit vorgesehenen Mess- und Regel- bzw. Einstellorganen individuell, d.h. unabhängig voneinander eingestellt werden. Alle Einheiten waren an je eine Hauptleitung für die zu behandelnde Flüssigkeit (Getränke) bzw. für das Dialysat angeschlossen. Das Getränk durchströmte dabei die Hohlfasern, während das Dialysat dieselben umströmte.

Die Versuche wurden mit verschiedenen Biersorten, die auch unter den Bezeichnungen «Kölsch», «Pils», «Export» und «Diät-Bier» bekannt sind, durchgeführt. Als Dialysat wurde vollentsalztes Wasser verwendet.

Beispiel 6

| | |
|---|---|
| Austauschfläche jeder der fünf Hohlfasereinheiten | ca. 1 m² |
| Anzahl der Hohlfasern pro Hohlfasereinheit | ca. 10 000 |
| Wandstärke der Hohlfasern (= Membrandicke) | ca. 11 μm |
| Durchmesser der Hohlfasern | ca. 200 μm |
| Ultrafiltrationsrate der Hohlfasern | 4 ml/h · m² · mm Hg |

Die Hohlfasern waren in Form eines Bündels im wesentlichen parallelliegender Fasern in einem Kunststoffgehäuse eingegossen.

| | |
|---|---|
| Bier-Durchflussmenge je Einheit | 6,3 bis 63 l/h |
| Dialysat-Durchflussmenge je Einheit | 6,3 bis 63 l/h |
| Bier- bzw. Dialysat-Temperatur | ca. 10°C |
| Maximal einstellbarer Druck auf der Bierseite (absolut) | ca. 4 bar |
| Maximal einstellbarer Druck auf der Dialysatseite (absolut) | ca. 3,95 bar |
| Differenzdruck | 0,05 bar |
| Alkoholgehalt des Bieres vor der Behandlung | 3,7 bis 4,7% |
| Alkoholgehalt des Bieres nach der Behandlung | 1,7 bis 3,0% |

Beispiel 7

| | |
|---|---|
| Austauschfläche jeder der fünf Hohlfasereinheiten | ca. 6 m² |
| Anzahl der Hohlfasern pro Hohlfasereinheit | ca. 40 000 |
| Bier-Durchflussmenge je Einheit | 40 bis 400 l/h |
| Dialysat-Durchflussmenge je Einheit | 40 bis 400 l/h |

Alle übrigen Daten und Werte wie Beispiel 6. Die Hohlfasern waren hierbei in Form je eines lösbar mit einem Edelstahlgehäuse verbundenen Hohlfasermoduls angeordnet.

## Patentansprüche

1. Verfahren zur Herstellung von vergorenen Getränken, wie Bier, Wein, Sekt und dergleichen mit reduziertem Alkoholgehalt, dadurch gekennzeichnet, dass ein nach einem üblichen Gärverfahren hergestelltes vergorenes Getränk bei einem Differenzdruck von weniger als 5,0 bar an einer Dialysemembran entlanggeleitet wird, während gleichzeitig an der anderen Seite der Dialysemembran eine Dialysatflüssigkeit strömt.

2. Verfahren nach Anspruch 1, dadurch gekennzeichnet, dass der Differenzdruck zwischen vergorenem Getränk und Dialysat weniger als 1,0 bar beträgt.

3. Verfahren nach den Ansprüchen 1 und 2, dadurch gekennzeichnet, dass der Differenzdruck zwischen vergorenem Getränk und Dialysat weniger als 0,5 bar beträgt.

4. Verfahren nach den Ansprüchen 1 bis 3, dadurch gekennzeichnet, dass der Differenzdruck zwischen vergorenem Getränk und Dialysat weniger als 0,1 bar beträgt.

5. Verfahren nach den Ansprüchen 1 bis 4, dadurch gekennzeichnet, dass das vergorene Getränk einer Dialyse und zusätzlich einer Ultrafiltration unterworfen wird.

6. Verfahren nach Anspruch 5, dadurch gekennzeichnet, dass die Ultrafiltration in einer von der Dialysestufe getrennten Ultrafiltrationsstufe erfolgt.

7. Verfahren nach Anspruch 6, dadurch gekennzeichnet, dass die getrennte Ultrafiltrationsstufe der Dialysestufe nachgeschaltet ist.

8. Verfahren nach den Ansprüchen 5 bis 7, dadurch gekennzeichnet, dass die zusätzliche Ultrafiltration durch Verwendung einer Dialysemembran mit einer Ultrafiltrationsrate von 7 bis 30 ml/m² h mm Hg bewirkt wird.

9. Verfahren nach den Ansprüchen 1 bis 8, dadurch gekennzeichnet, dass die Dialysemembran für Moleküle mit einem Molekulargewicht von mehr als 100 eine geringere Permeabilität aufweist.

10. Verfahren nach den Ansprüchen 1 bis 9, dadurch gekennzeichnet, dass die Dialysatflüssigkeit Extraktstoffe des vergorenen Getränkes enthält.

11. Verfahren nach Anspruch 10, dadurch gekennzeichnet, dass als Dialysatflüssigkeit ein nach einem beliebigen Verfahren hergestelltes alkoholfreies, dem zu dialysierenden entsprechendes, vergorenes Getränk verwendet wird.

12. Verfahren nach den Ansprüchen 1 bis 11, dadurch gekennzeichnet, dass der in der Dialysatflüssigkeit angereicherte Alkohol durch Adsorption, Extraktion, Umkehrosmose und/oder Destillation aus dem Dialysat entfernt wird.

13. Verfahren nach Anspruch 12, dadurch gekennzeichnet, dass die vom Alkohol befreite Dialysatflüssigkeit als Dialysatflüssigkeit wiederverwendet wird.

14. Verfahren nach den Ansprüchen 1 bis 13, dadurch gekennzeichnet, dass bei kohlendioxidhaltigen vergorenen Getränken der Druck, bei dem die Dialyse durchgeführt wird, oberhalb des Sättigungsdruckes des im vergorenen Getränk gelösten Kohlendioxids liegt.

15. Verfahren nach Anspruch 14, dadurch gekennzeichnet, dass die Dialysatflüssigkeit eine der Kohlendioxidmenge des zu dialysierenden vergorenen Getränkes entsprechende Menge Kohlendioxid enthält.

16. Vorrichtung zur Durchführung des Verfahrens nach den Ansprüchen 1 bis 15, gekennzeichnet durch eine Dialyse-Membran (1), ein Gehäuse (3) zur Aufnahme der Membran (1), bestehend aus einer mit einer ersten Zuführleitung (8) und einer ersten Abführleitung (9) verbundenen ersten Kammer (6) und einer mit einer zweiten Zuführleitung (10) und einer zweiten Abführleitung (11) verbundenen zweiten Kammer (7), wobei die beiden Kammern (6; 7) durch die Membran (1) und übliche flüssigkeitsundurchlässige Dichtelemente (5) und/oder Trennwände (4) voneinander getrennt sind, ein mit der ersten Kammer (6) und ein mit der zweiten Kammer (7) verbundenes, mit gleichmässigem Druck arbeitendes Förderaggregat (12; 22), je ein in der ersten und in der zweiten Zuführleitung (8; 10) und/oder je ein in der ersten und in der zweiten Abführleitung (9; 11) angeordnetes Durchflussmengeneinstellorgan (33; 36), ein Regelorgan (34; 37; 38) zur Einstellung eines konstanten niedrigen Differenzdruckes zwischen der ersten Kammer (7), ein Regelorgan (39; 40; 41; 42; 43) zur Einstellung eines beliebigen, jedoch höchstens geringfügig unterschiedlichen Druckniveaus in den beiden Kammern (6; 7) sowie eine Einrichtung (44) zum Temperieren der durch die erste Kammer (6) und/oder der durch die zweite Kammer (7) strömenden Flüssigkeit.

17. Vorrichtung nach Anspruch 16, gekennzeichnet durch ein ohne bewegte Teile nur mit statischem Druck arbeitendes Förderaggregat.

18. Vorrichtung nach Anspruch 17, dadurch gekennzeichnet, dass wenigstens eines der Förderaggregate (12; 22) ein mit einem Inertgas beaufschlagter Flüssigkeitsvorratsbehälter (14; 24) ist.

19. Vorrichtung nach den Ansprüchen 16 bis 18, dadurch gekennzeichnet, dass die Membran (1) in Form eines zwar flüssigkeitsdicht aber lösbar mit dem Gehäuse (3) verbundenen Membranmoduls (1; 2) vorliegt.

20. Vorrichtung nach den Ansprüchen 16 bis 19, dadurch gekennzeichnet, dass wenigstens in der ersten oder in der zweiten Zuführleitung (8; 10) und/oder in der ersten oder in der zweiten Abführleitung (9; 11) ein Kohlendioxid-Dosieraggregat (20; 21; 30; 31) angeordnet ist.

21. Vorrichtung nach den Ansprüchen 16 bis 20, dadurch gekennzeichnet, dass zwei oder mehrere Membranmoduln (1; 2) in Parallelschaltung angeordnet sind.

22. Vorrichtung nach den Ansprüchen 16 bis 21, dadurch gekennzeichnet, dass zwei oder mehrere Membranmoduln (1; 2) in Parallelschaltung und ohne Unterbrechung der Funktion der Vorrichtung gegebenenfalls auch einzeln austauschbar angeordnet sind.

**Claims**

1. A method of producing fermented drinks, such as beer, wine, champagne and the like, having a reduced alcohol content, characterised in that a fermented drink produced according to a conventional fermentation method is passed along a dialysis membrane at a pressure difference of less than 5.0 bars, while a dialysate liquid flows simultaneously on the other side of the dialysis membrane.

2. A method according to claim 1, characterised in that the pressure difference between the fermented drink and the dialysate is less than 1.0 bar.

3. A method according to claims 1 and 2, characterised in that the pressure difference between the fermented drink and the dialysate is less than 0.5 bar.

4. A method according to claims 1 to 3, characterised in that the pressure difference between the fermented drink and the dialysate is less than 0.1 bar.

5. A method according to claims 1 to 4, characterised in that the fermented drink is subjected to dialysis and also to ultrafiltration.

6. A method according to claim 5, characterised in that ultrafiltration takes place in an untrafiltration step separate from the dialysis step.

7. A method according to claim 6, characterised in that the separate ultrafiltration step follows the dialysis step.

8. A method according to claims 5 to 7, characterised in that the additional ultrafiltration is effected using a dialysis membrane at an ultrafiltration rate of from 7 to 30 ml/m$^2$ h mm Hg.

9. A method according to claims 1 to 8, characterised in that the dialysis membrane has a comparatively low permeability for molecules having a molecular weight of more than 100.

10. A method according to claims 1 to 9, characterised in that the dialysate liquid contains extractive substances of the fermented drink.

11. A method according to claim 10, characterised in that the dialysate liquid is a non-alcoholic, fermented drink which has been produced according to any method and corresponds to the drink to be dialysed.

12. A method according to claims 1 to 11, characterised in that the alcohol concentrated in the dialysate liquid is removed from the dialysate by adsorption, extraction, reverse osmosis and/or distillation.

13. A method according to claim 12, characterised in that the dialysate liquid freed from the alcohol is re-used as the dialysate liquid.

14. A method according to claims 1 to 13, characterised in that in the case of fermented drinks containing carbon dioxide, the pressure at which dialysis is carried out is above the saturation pressure of the carbon dioxide dissolved in the fermented drink.

15. A method according to claim 14, characterised in that the dialysate liquid contains a quantity of carbon dioxide corresponding to the quantity of carbon dioxide in the fermented drink to be dialysed.

16. An apparatus to implement the method according to claims 1 to 15, characterised by a dialysis membrane (1), a housing (3) to receive the membrane (1) comprising a first chamber (6) connected to a first supply pipe (8) and to a first removal pipe (9), and a second chamber (7) connected to a second supply pipe (10) and to a second removal pipe (11), both chambers (6; 7) being separated from each other by the membrane (1) and by conventional liquid-impermeable sealing elements (5) and/or dividing walls (4), a transport unit (12) connected to the first chamber (6) and a transport unit (22) connected to the second chamber (7), both working at a steady pressure; throughflow rate adjusting members (33; 36) positioned in the first and second supply pipes (8; 10) and/or throughflow rate adjusting members positioned in the first and second removal pipes (9; 11) a control member (34; 37; 38) for adjusting a constant low pressure difference between the first chamber (7), a control member (39, 40; 41; 42; 43) for adjusting any pressure level in both chambers (6; 7) which pressure level varies negligibly at the most, and also a device (44) for controlling the temperature of the liquid flowing through the first chamber (6) and/or the liquid flowing through the second chamber (7).

17. An apparatus according to claim 16, characterised by a transport unit only working at static pressure without moving parts.

18. An apparatus according to claim 17, characterised in that a least one of the transport units (12; 22) is a liquid storage container (14; 24) charged with an inert gas.

19. An apparatus according to claims 16 to 18, characterised in that the membrane (1) is in the form of a membrane module (1; 2) which is liquid-tight, but is connected to the housing (3) in a detachable manner.

20. An apparatus according to claims 16 to 19, characterised in that a carbon dioxide-metering unit (20; 21; 30; 31), is installed at least in the first or in the second supply pipe (8; 10) and/or in the first or in the second removal pipe (9; 11).

21. An apparatus according to claims 16 to 20, characterised in that two or more membrane modules (1; 2) are connected in parallel.

22. An apparatus according to claims 16 to 21, characterised in that two or more membrane modules (1; 2) are connected in parallel and are so mounted as to be optionally individually exchangeable without interrupting the operation of the apparatus.

## Revendications

1. Procédé pour la fabrication de boissons fermentées, comme la bière, le vin, le champagne et boissons similaires, ayant un degré alcoolique réduit, caractérisé par le fait qu'une poisson fermentée fabriquée selon un procédé classique de fermentation est envoyé le long d'une membrane de dialyse avec une pression différentielle inférieure à 5 bars, pendant qu'un liquide de dialysat circule simultanément sur l'autre côté de la membrane de dialyse.

2. Procédé selon la revendication 1, caractérisé par le fait que la pression différentielle entre la boisson fermentée et le dialysat est inférieure à 1 bar.

3. Procédé selon les revendications 1 et 2, caractérisé par le fait que la pression différentielle entre la boisson fermentée et le dialysat est inférieure à 0,5 bar.

4. Procédé selon les revendications 1 à 3, caractérisé par le fait que la pression différentielle entre la boisson fermentée et le dialysat est inférieure à 0,1 bar.

5. Procédé selon les revendications 1 à 4, caractérisé par le fait que la boisson fermentée est soumise à une dialyse et, en supplément, à une ultrafiltration.

6. Procédé selon la revendication 5, caractérisé par le fait que l'ultrafiltration s'effectue dans un stade d'ultrafiltration séparé du stade de dialyse.

7. Procédé selon la revendication 6, caractérisé par le fait que le stade séparé d'ultrafiltration est intercalé à la suite du stade de dialyse.

8. Procédé selon les revendications 5 à 7, caractérisé par le fait que l'ultrafiltration supplémentaire est réalisée en utilisant une membrane de dialyse ayant une vitesse d'ultrafiltration de 7 à 30 ml/m$^2$ h mm Hg.

9. Procédé selon les revendications 1 à 8, caractérisé par le fait que la membrane de dialyse présente une faible perméabilité pour les molécules ayant un poids moléculaire supérieur à 100.

10. Procédé selon les revendications 1 à 9, caractérisé par le fait que le liquide de dialysat contient les matières extraites de la boisson fermentée.

11. Procédé selon la revendication 10, caractérisé par le fait qu'une boisson fermentée correspondant à la boisson fermentée à dialyser, sans alcool, fabriquée selon un procédé quelconque, est utilisée comme liquide de dialysat.

12. Procédé selon les revendications 1 à 11, caractérisé par le fait que l'alcool concentré dans le liquide de dialysat est éliminé du dialysat par adsorption, extraction, osmose inverse et/ou distillation.

13. Procédé selon la revendication 12, caractérisé par le fait que le liquide de dialysat débarrassé de l'alcool est utilisé comme liquide de dialysat.

14. Procédé selon les revendications 1 à 13, caractérisé par le fait que pour les boissons fermentées contenant du gaz carbonique, la pression à laquelle est effectuée la dialyse, est supérieure à la pression de saturation du gaz carbonique dissous dans la boisson fermentée.

15. Procédé selon la revendication 14, caractérisé par le fait que le liquide de dialysat contient une quantité de gaz carbonique correspondant à la quantité de gaz carbonique de la boisson fermentée à dialyser.

16. Dispositif pour exécuter le procédé selon les revendications 1 à 15, caractérisé par une membrane de dialyse (1), une enveloppe (3) pour recevoir la membrane (1), constituée par un premier compartiment (6) relié à un premier tube d'arrivée (8) et à un premier tube de départ (9) et par un deuxième compartiment (7) relié à un deuxième tube d'arrivée (10) et à un deuxième tube de départ (11), les deux compartiments (6; 7) étant séparés l'une de l'autre par la membrane (1) et par des éléments étanches (5) et/ou des cloisons (4) usuels imperméables au liquide, des ensembles de circulation (12; 22) l'un relié au premier compartiment (6) et l'autre relié au deuxième compartiment (7) fonctionnant avec une pression constante, des organes de réglage du débit (33; 36) disposés respectivement dans le premier et dans le deuxième tubes d'arrivée (8; 10) et/ou dans le premier et dans le deuxième tubes de départ (9; 11), des organes de régulation (34; 37; 38) pour régler une pression différentielle faible, constante, entre le premier compartiment (6), et le deuxième compartiment (7), des organes de régulation (39; 40; 41; 42; 43) pour régler des niveaux de pression quelconques, mais tout au plus suffisamment différents dans les deux compartiments (6; 7), et un dispositif (44) pour amener à température constante le liquide circulant à travers le premier compartiment (6) et/ou le liquide circulant à travers le deuxième compartiment (7).

17. Dispositif selon la revendication 16, caractérisé par un ensemble de circulatin sans partie mobile ne fonctionnant qu'avec la pression statique.

18. Dispositif selon la revendication 17, caractérisé par le fait qu'au moins un des ensembles de circulation (12; 22) est un réservoir de liquide (14; 24) soumis à l'action d'un gaz inerte.

19. Dispositif selon l'une des revendications 16 à 18, caractérisé par le fait que la membrane (1) se présente sous forme d'un module de membrane (1; 2) effectivement étanche aux liquides mais amovible, relié à l'enveloppe (3).

20. Dispositif selon l'une des revendications 16 à 19, caractérisé par le fait qu'un ensemble doseur du gaz carbonique (20; 21; 30; 31) est placé au moins dans le premier ou dans le deuxième tube d'arrivée (8; 10) et/ou dans le premier ou dans le deuxième tube de départ (9; 11).

21. Dispositif selon l'une des revendications 16 à 20, caractérisé par le fait que deux ou plusieurs modules de membrane (1; 2) sont disposés montés en parallèle.

22. Dispositif selon l'une des revendications 16 à 21, caractérisé par le fait que deux ou plusieurs modules de membrane (1; 2) sont disposés en parallèle et sont remplaçables éventuellement même séparément sans interrompre le fonctionnement du dispositif.

Fig. 1

0 021 247

Fig. 2